# EUROPEAN PATENT SPECIFICATION

(11) **EP 2 294 005 B1**
(45) Date of publication and mention of the grant of the patent: **27.03.2013**
(21) Application number: 09751499.6
(22) Date of filing: 20.05.2009
(51) Int. Cl.: C30B 28/14, C01B 33/027, C30B 15/02, C30B 25/10, C30B 28/10, C30B 28/06, C30B 11/04, C30B 29/06, C30B 29/02, B01J 19/08, H05H 1/50

(54) **METHOD AND SKULL REACTOR FOR PRODUCING SILICON OR A REACTIVE METAL**
VERFAHREN UND SCHALENREAKTOR ZUR HERSTELLUNG VON SILIZIUM ODER EINEM REAKTIVEN METALL
PROCÉDÉ ET RÉACTEUR DU TYPE FOND DE POCHE FOND POUR LA PRODUCTION DE SILICIUM OU MÉTAL RÉACTIF

(30) Priority: 11.02.2009 US 378250; 23.05.2008 US 128847
(43) Date of publication of application: 16.03.2011
(73) Proprietor: REC Silicon Inc., Moses Lake, Washington 98837-9505 (US)
(72) Inventor: HUGO, Franz, 63743 Aschaffenburg (DE)
(74) Representative: Stainthorpe, Vanessa Juliet
(86) International application number: PCT/US2009/044712
(87) International publication number: WO 2009/143271

(56) References cited:
- US-A- 4 049 384
- US-A- 4 188 368
- US-A- 4 188 368
- US-A- 4 343 772
- US-A- 4 343 772
- US-A- 4 787 986
- US-A- 4 787 986

## Description

### FIELD

The disclosure relates to methods, apparatus and systems for treating a silicon-bearing material or a reactive metal material.

### BACKGROUND

Ultrapure or high-grade polycrystalline silicon (polysilicon) is a critical raw material for both the semiconductor (SC) and photovoltaic (PV) industries. While there are alternatives for specific PV applications, polysilicon will remain the preferred raw material in the near and foreseeable future. Hence, improving the availability of and economics for producing polysilicon will increase the growth opportunities for both industries.

The majority of polysilicon is produced by the commonly called Siemens hot-wire method with silane or trichlorosilane (TCS) as the silicon-bearing gas (SBG) source. The SBG, usually mixed in other inert or reaction gases, is pyrolytically decomposed and deposited onto a heated silicon filament. Another method is the pyrolytic decomposition of SBG in fluidized beds. This is an attractive alternative to produce polysilicon for the PV and semiconductor industries due to significantly lower energy consumption and the possibility for continuous production. These benefits stem from the excellent mass and heat transfer and increased surface for deposition. Compared with the Siemens-type reactor, the fluidized bed reactor offers considerably higher production rates at a fraction of the energy consumption. The fluidized bed reactor will also be more continuous and highly automated to significantly reduce labor costs as well.

Silane, or higher order silanes, used as the SBG in the Siemens or fluidized bed reactor process has a disadvantage over TCS in that it can undergo a (homogeneous) gas phase decomposition to powder particles in addition to the (heterogeneous) polysilicon deposition. The temperature at which the decomposition occurs is called the critical nucleation temperature (CNT). The CNT depends on the SBG species, SBG partial pressure, total pressure and type of inert dilution gas. Once the CNT is reached, the particle concentration will increase 10⁴-10⁶ times over a 1-5 °C range. Nucleus silicon powder particles are typically 1-100 nm in size depending on the residence time and can be amorphous or crystalline. In either case, there exists a moderate concentration of non-bonded electrons on the surface of these particles, which enables the particles to readily agglomerate into larger powder particles. Depending on conditions, this powder can be anything from non-single nuclei particles, micron-sized round agglomerates to large particles extended to several 100 microns.

These powder particles (also known as silicon fines) are considered contaminants in the Siemens process if the polysilicon is subsequently used for the growth of a dislocation-free single crystal, particularly in the semiconductor industry. Therefore, in a Siemens process with silane or higher order silanes as the SBG, the reactor walls are kept cool, applying thermophoresis to drive the powder particles from the region near the hot rods where they are produced towards the cool reactor walls where they deposit. Removing the powder from the gas phase reduces the potential for contamination of the silicon rod.

In a fluidized bed reactor process, powder may adhere to granules and incorporate in the particle, thus contributing to the overall granular growth. However, a large portion of the powder will be entrained out of the fluid bed reactor with the outgoing gases. In a fluidized bed reactor process for granular silicon production, such fine silicon powder is considered a production loss since it does not contribute to granular material.

Silicon powder may also be produced in other SBG deposition processes, e.g., intentionally in a Free Space Reactor or unintentionally in Chemical Vapor Deposition (CVD) reactor for thin film deposition on a substrate. Another source of silicon powder is silicon ingot grinding or cutting. The production rates and silicon qualities vary considerably depending on the processes.

Powder produced as described in the processes above currently is recovered with great difficulty because it is a fluffy, low density, high surface area product, easily contaminated by airborne substances. In addition, the silicon powder is typically disposed of as a waste product or is offered at very low value into the merchant silicon market.

US4188368 discloses a method of producing silicon using arc heaters to heat a carrier gas injected via a plurality of ports. US4787986 discloses a process for melting silicon powder using a melting crucible. US4343772 discloses a thermal reactor apparatus for pyrolytically decomposing silane gas into liquid silicon.

### SUMMARY

The invention is defined in the appended claims.

Disclosed herein are methods for thermally treating a silicon-bearing material or a reactive metal in order to convert this material into a more useful product form. For example, the disclosed methods upgrade silicon powder from a low-grade, loose-packed, high surface area product to a silicon feedstock suitable for PV and SC processing requirements. Avoiding contamination during the thermal treatment process is important for obtaining pure, particularly ultrapure, product. One contamination source is the materials that constitute the structural elements of the reactor system. According to the apparatus, systems and methods disclosed herein a skull layer comprising solid silicon or solid reactive metal is formed on at least a portion of the inside surface of the reactor. The solid skull layer prevents contact of the feed material and product with the surface of the reactor system, thus avoiding or minimizing contamination. The skull layer also may provide a diffusion barrier for preventing migration of reactor wall elements into the silicon product.

According to one embodiment, a method for producing silicon or a reactive metal is disclosed herein that comprises:
introducing a silicon-bearing feed or reactive metal feed into a reactor chamber, wherein the reactor chamber includes a reactor chamber wall having (i) an inside surface facing a reaction space and (ii) an opposing outside surface;
generating a first thermal energy within the reaction space sufficient to generate a liquid silicon product or a liquid reactive metal product;
generating a second thermal energy exterior to the reactor chamber wall such that a heat flow from the second thermal energy initially impacts the outside surface of the reactor chamber wall; and
establishing an inside surface wall temperature within a temperature range that is above or below a melting point temperature of the silicon or the reactive metal by controlling the first thermal energy source and the second thermal energy source.

In a further embodiment, a method for producing silicon is disclosed that comprises:
introducing silicon powder into a reactor chamber, wherein the reactor chamber includes a reactor chamber wall having (i) an inside surface facing a reaction space and (ii) an opposing outside surface;
generating a plasma in the reactor space;
thermally melting the silicon powder by subjecting the silicon powder to a temperature greater than the melting point of the silicon powder via the plasma, wherein the melting process produces liquid silicon;
maintaining the inside surface of the reactor chamber wall at an equilibrium temperature below the melting point of the silicon powder while thermally melting the silicon powder; and
solidifying the liquid silicon after it exits the reactor chamber.

An additional disclosed embodiment concerns a method for producing solid multicrystalline silicon that comprises:
introducing a silicon-bearing gas into a reactor chamber, wherein the reaction chamber includes a reactor chamber wall having (i) an inside surface facing a reaction space and (ii) an opposing outside surface, and a product outlet;
generating a plasma in the reactor space;
thermally decomposing the silicon-bearing gas by subjecting the silicon-bearing gas to a sufficient temperature to produce liquid silicon;
maintaining the inside surface of the reactor chamber wall at an equilibrium temperature below the melting point temperature of silicon while thermally decomposing the silicon-bearing gas; and
introducing the liquid silicon from the product outlet directly into a module for casting the liquid silicon into solid multicrystalline silicon ingot or wafer.

An additional method for producing silicon disclosed herein includes:
introducing silane gas into a reactor chamber, wherein the reaction chamber includes a reactor chamber wall having (i) an inside surface facing a reaction space and (ii) an opposing outside surface, and a product outlet;
generating a plasma in the reactor space;
thermally decomposing the silane gas by subjecting the silane gas to the plasma to produce liquid silicon; and
maintaining the inside surface of the reactor chamber wall at an equilibrium temperature below the melting point temperature of silicon while thermally decomposing the silane gas.

Also disclosed herein is a reactor system that comprises:
a silicon-bearing feedstock or a reactive metal feedstock;
a reaction chamber that includes a reactor chamber wall that defines a chamber reaction space and includes (i) an inside surface facing the reaction space and (ii) an opposing outside surface;
a plasma energy source coupled to the reaction chamber and configured to generate thermal energy within the chamber reaction space;
an exterior thermal energy source configured to subject the outside surface of the reactor chamber wall to heating, and located outside of the reactor chamber; and
a product outlet configured for withdrawing liquid silicon or liquid reactive metal from the reaction chamber.

In a preferred form, an adjustable energy flow of 1 to 2000kW/m² from the reaction space through the reactor chamber wall is produced by controlling the first thermal energy source and the second energy source.

The foregoing will become more apparent from the following detailed description, which proceeds with reference to the accompanying figures.

### BRIEF DESCRIPTION OF THE DRAWINGS

FIGS. 1A and 1B are schematics of one embodiment of the disclosed reactor system. FIG. 1A is an exploded view of a wall section of the reactor shown in FIG. 1B.
FIG. 2 is a schematic of a further embodiment of the disclosed reactor system.
FIG. 3 is a schematic of a reactor system that includes one solidification embodiment.
FIG. 4 is a schematic of a reactor system that includes another solidification embodiment.
FIG. 5 is a schematic of a reactor system that includes a further solidification embodiment.
FIG. 6 is a schematic of a temperature gradient in the disclosed reactor system.
FIG. 7 is a schematic of two heat flows in the disclosed reactor system.

In the figures like reference numerals refer to like elements unless otherwise specified.

### DETAILED DESCRIPTION

The singular terms "a," "an," and "the" include plural referents unless context clearly indicates otherwise. The word "comprises" indicates "includes." Unless otherwise indicated, description of components in chemical nomenclature refers to the components at the time of addition to any combination specified in the description, but does not necessarily preclude chemical interactions among the components of a mixture once mixed. Any numerical values recited herein include all values from the lower value to the upper value in increments of one unit provided that there is a separation of at least 2 units between any lower value and any higher value. As an example, if it is stated that the amount of a component or a value of a process variable is from 1 to 90, preferably from 20 to 80, more preferably from 30 to 70, it is intended that values such as 15 to 85, 22 to 68, 43 to 51, 30 to 32 etc., are expressly enumerated in this specification. For values, which have less than one unit difference, one unit is considered to be 0.1, 0.01, 0.001, or 0.0001 as appropriate. Thus all possible combinations of numerical values between the lowest value and the highest value enumerated herein are said to be expressly stated in this application.

The reactor systems disclosed herein are thermally designed to maintain a substantially solid skull layer of silicon or the reactive metal feed on an inside surface of a reactor chamber wall. Moreover, the thermal design of the system enables more precise controlling of the skull layer thickness. The skull layer may cover only a portion of the inside wall surface or it may cover the entire surface area of the inside surface. Formation of the solid skull layer on the inside surface of the reactor chamber wall protects the chamber wall construction material from corrosive attack by the liquid silicon or the liquid reactive metal. In other words, the skull layer prevents direct contact between the chamber wall and the liquid silicon thus minimizing contamination of the liquid silicon product. The skull layer is formed by maintaining the inside surface of the reactor chamber wall at a temperature below the melting point of the silicon or the respective reactive metal melting point.

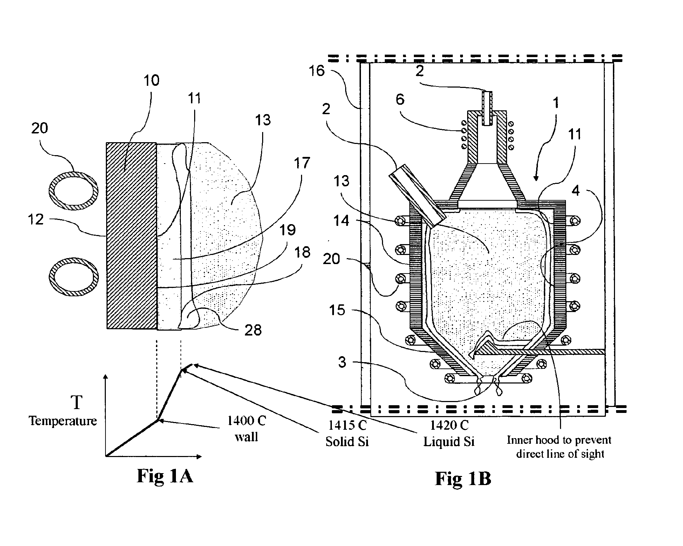

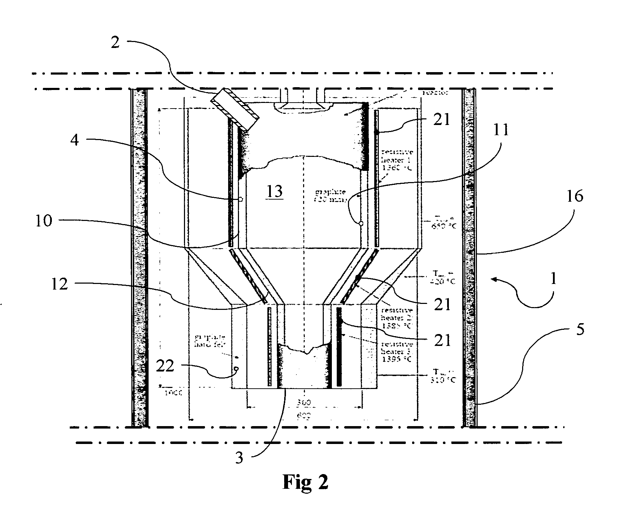

The thermal control system includes a combination of an inner thermal energy source inside the reactor chamber and an exterior thermal energy source located outside or external to the reactor chamber. The exterior thermal energy source is also located within a confinement chamber that also encompasses the reactor chamber. The exterior thermal energy source may provide heat directly to the outside surface of the reactor wall via induction heating, resistance heating, or a combination of both. In an embodiment shown in FIGS. 1A, 1B, 3, and 7B the exterior energy source is an induction coil(s). In another embodiment shown in FIG. 2, the exterior energy source is a resistance heater(s). Microwave is another possible exterior energy source. The inner thermal energy source may be a plasma as described in more detail below. Alternatively, the inner thermal energy source may be electron beams, resistance heating elements or induction heating elements.

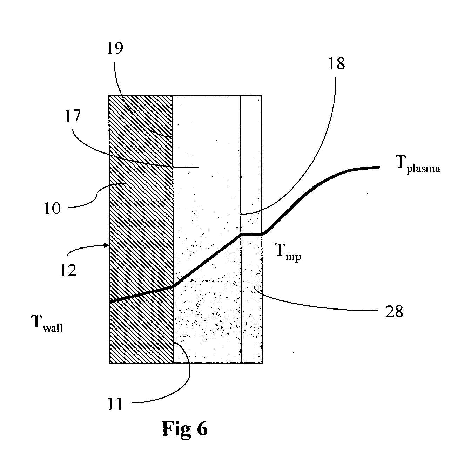

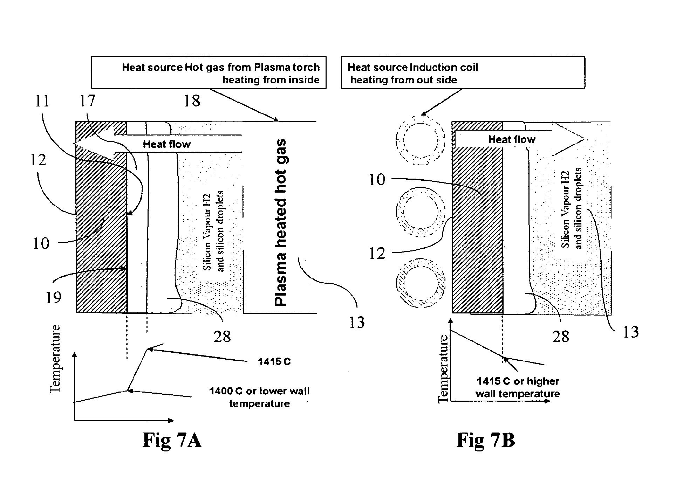

The heat flows generated by the inner thermal energy source and the exterior energy source are shown in FIG. 7A and 7B, respectively. The inner heat flow progresses as follows: a heated reaction gas → liquid silicon film → solid silicon skull layer → reactor chamber wall. The exterior heat flow progresses as follows: reactor chamber wall → solid silicon skull layer → liquid silicon film. The inner thermal energy source provides the energy for the thermal decomposition of the feedstock material. The exterior thermal energy source provides for precise control of the reactor chamber wall inside surface temperature in a range sufficiently close to (but under) the melting point of the silicon or the reactive metal. The resulting temperature gradient is shown in FIG. 6.

The exterior thermal energy source may be configured into at least one temperature control zone. The different temperature control zones may be used to establish a different temperature profile or zone along the axial length of the reactor chamber.

As described above, the processes disclosed herein establish a temperature gradient from the outside surface of the reactor chamber to the reaction space inside the reactor chamber as shown in FIG. 6. The specific temperature gradient will vary depending upon several factors including the feedstock material, the feed rate, operating pressure within the reactor space, etc. In addition, the temperature gradient is time dependent since it will change beginning from start-up of the reactor to steady-state operation. Accordingly, the specific temperatures of the thermal control system will vary. However, in general, the inside surface of the reactor chamber wall may be 1 to 300°C below the melting point of the feedstock material, more particularly 1 to 100°C below the melting point of the feedstock material; the skull layer may be at the melting point of the feedstock material to 300°C below the melting point of the feedstock material, more particularly the melting point to 100°C below the melting point; and the reactor space may be at the melting point of silicon or the reactive metal up to more than 5000°C.

The overall thermal control approach may also include thermal insulation as described below in more detail.

Illustrative embodiments of the reactor system are shown in FIGS. 1-5. In general, a reactor system 1 includes at least one feedstock inlet 2, at least one liquid product outlet 3, a reactor chamber 4, an outer containment chamber 5, and a plasma generating source 6.

The feedstock inlet 2 may be any type of port or valve that enables controlled introduction of the feedstock into the reactor chamber 4. For example, the inlet 2 may be a nozzle such as a water cooled structure made from quartz, graphite and/or silicon.

The reactor chamber 4 includes a reactor chamber wall 10 that defines a reaction space 13 located within the reactor chamber wall 10. The reactor chamber wall 10 includes an inside surface 11 facing the reactor space 13 and an opposing outside surface 12. The reactor chamber may be provided in any shape such as cylindrical, oval, rectangular, etc. Cylindrical reactor chambers are shown in the Figures. In certain embodiments, the reactor chamber may have several different sized and/or shaped sections. For example, Figure 1 depicts a first cylindrical section 14 and a second tapered or conical section 15. The second section 15 tapers into the product outlet 3. The reactor chamber wall 10 may be made from made from any material that resists corrosion and contamination of the feedstock or product, is amenable to skull layer formation, and offers the desired heat or energy conductive or resistant properties. Illustrative wall construction materials include graphite, molybdenum, tungsten, titanium, a ceramic (e.g., alumina), and quartz.

The inside surface 11 area should be sufficiently large to enable collection and liquid conversion of the feedstock material on the inside surface 11. Depending on the desired throughput in kg/h, the inside surface 11 area should be in a range of 0.2 m² to 5 m² for a product throughput in a range of 1 to 50 kg/h.

The power supply for generating the plasma may be any type of power supply. Illustrative plasmas include RF, DC arc, or microwave plasma. Depending upon the specific plasma type, the plasma power may range from 1 to 1000 kW, more particularly 10 to 200 kW.

The product outlet 3 may be coupled to a product collection module and/or product solidification module. For example, the product can be cooled during free fall through a solidification tower and then collected in water-cooled bins if mm-sized droplets are desired.

In the embodiment of FIGS. 1A and 1B, at least one heat induction coil(s) 20 is located at or near the outside surface 12 of the reactor chamber wall. The coil 20 may surround the entire periphery or only a portion of the periphery of the reactor chamber. The coil 20 is made from any heat transfer material that enables sufficient heating of the reactor chamber wall. The coil 20 also can act as a heat sink and supplement the outer water-cooled containment chamber wall that also acts as a heat sink.

In the embodiment of FIG. 2, at least one resistance heater(s) 21 is disposed at or near the outside surface 12 of the reactor chamber wall. The resistance heater 21 heats the reactor chamber wall. The FIG. 2 embodiment also includes an insulation element 22 disposed between the reaction chamber wall and the containment chamber wall. The insulation thickness may be designed with different thicknesses along the vertical height axis of the reactor.

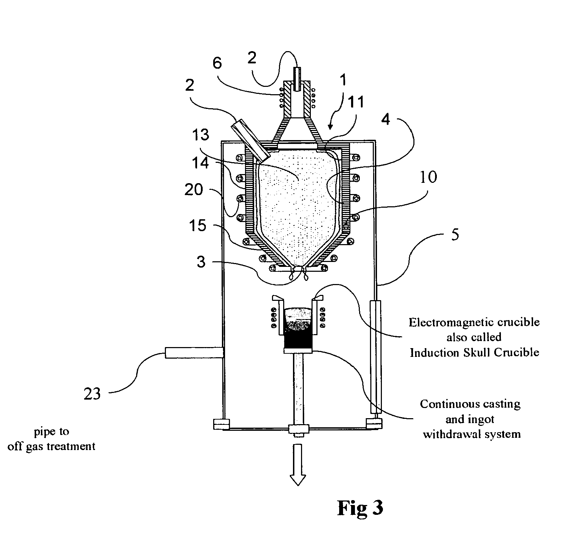

The outer containment chamber 5 is shown, for example, in FIGS. 2 and 3. The containment chamber 5 hermetically seals at least the reaction chamber 4. The containment chamber 5 includes a containment chamber wall 16 that may be water-cooled. The water-cooled containment chamber wall 16 also can be a heat sink for the reactor chamber thermal energies and heat flows described above.

FIGS. 3-5 illustrate several different solidification modules that can be coupled to the reactor system.

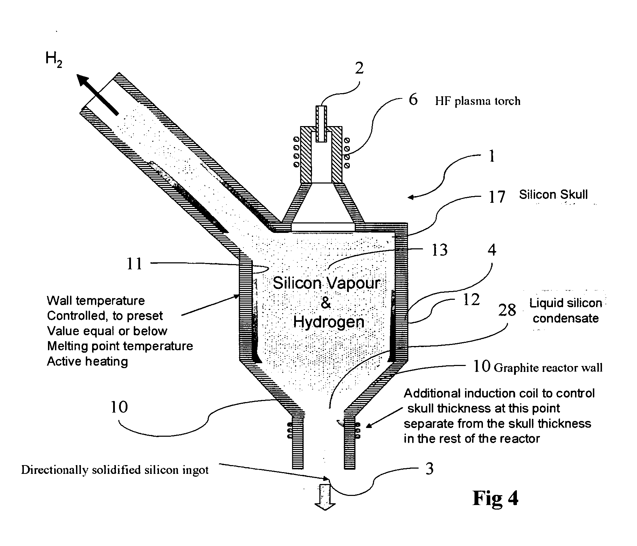

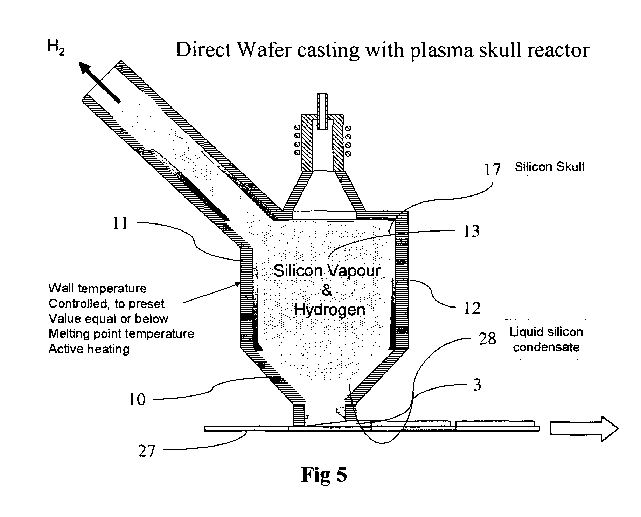

FIG. 3 includes an electromagnetic crucible coupled to a continuous casting system that enables the casting of silicon ingots. FIG. 4 depicts a configuration that enables production of directionally solidified silicon ingot. The liquid silicon from the outlet 3 can be channeled into the electromagnetic crucible. The advantages of direct coupled electromagnetic casting include no additional cost for transport containers, silicon is not re-melted, and contamination is minimized since ultrapure silicon is solidified in a non-contaminating skull layer crucible. Fig. 5 depicts a configuration that enables production direct wafer casting by introducing the liquid silicon product of the presently disclosed reactor system onto a moving horizontal support substrate 27. U.S. Patent No. 4,670,096, incorporated herein by reference, describes a process for direct wafer casting with liquid silicon onto a moving horizontal support.

FIG. 3 also includes an off gas port 23 that connects to an off gas treatment system.

Operation of the reactor system may be initiated by heating the reactor chamber wall (via thermal energy from the exterior heat source, the inner heat source, or a combination of both the exterior and the inner heat sources) to greater than the melting point of the feedstock material. This pre-heating with a silicon-bearing material present will form a silicon carbide layer on the graphite reactor chamber wall. The reactor chamber wall temperature then would be lowered so that the inside surface would be below the melting point of the feedstock material. The material melting in the reaction space 13 will contact the inside surface thus initiating formation of the solid (frozen) skull layer 17. The skull layer 17 includes an inner surface 18 and an opposing wall contact surface 19. A temperature gradient is established across the reactor chamber wall, the skull layer and the gas in the reaction space as shown in FIG. 6. At thermal equilibrium conditions the skull layer thickness is no longer increasing, and the skull layer temperature reaches liquid material temperature on the surface 18 facing the reaction space 13 of the reactor. A liquid silicon film 28 will condense at the inner surface 18, and then flow along the inner surface 18 down the vertical axis of the reactor chamber. The melting process may also produce silicon vapor.

In the case of a silicon-bearing material feedstock, the maximum chamber wall inside surface 11 temperature should not exceed 1414 °C (1 °C less than the melting point of silicon) during skull layer formation and steady state operation. In certain embodiments the inside surface 11 temperature may range from 1115 to 1414 °C, more particularly 1215 to 1414 °C. The heat from the exterior thermal energy source maintains the reactor chamber wall temperatures at the desired temperature ranges allowing controlling of the skull thickness through controlling the wall temperature.

The heat flow from the reactor chamber typically is dissipated to a heat sink external to the reactor chamber. The heat sink may be active cooling (e.g., water cooled-containment chamber walls) and/or passive cooling such as insulation.

The feedstock material is introduced into the reactor chamber 4 via the inlet 2. The feedstock material may be any silicon-bearing material or a reactive metal. The silicon-bearing material may be solid silicon such as silicon powder or fines (as described in more detail herein), or a silicon-bearing gas such as silane, disilane, higher order silanes (SiₙH₂ₙ₊₂), dichlorosilane, trichlorosilane, silicon tetrachloride, dibromosilane, tribromosilane, silicon tetrabromide, diiodosilane, triiodosilane, silicon tetraiodide or a mixture thereof. Reactive metals such as titanium or zirconium could also be reduced using the process and apparatus disclosed herein. The silicon powder introduced into the reactor system may be small silicon particles (fines/powder) produced from silicon handling (e.g., breaking, grinding or cutting) or by any process that decomposes a silicon-containing gas. The powder may be dispersed or suspended in a carrier medium for injecting into the reactor system. For example, the carrier medium may be a gas that is inert to silicon and/or that has a relatively low ionization potential such as Ar.

The operating pressure in the reaction space 13 may range from 0.1 bar to 2.0 bar, more particularly 0.5 bar to 2.0 bar.

If the feedstock material is a silicon-bearing gas, the critical temperature is the thermal decomposition temperature at which the gas decomposes into a liquid. Thus, the inside surface of the reactor chamber wall is maintained at an equilibrium temperature below the melting point temperature. The embodiments shown in FIGS. 4 and 5 enable the production of a silicon ingot (FIG. 4) or a wafer (FIG. 5) directly from a silicon-bearing gas (e.g., silane) feedstock thus avoiding the costly step of forming, re-melting and cutting of polycrystalline silicon. A second gas, hydrogen, is present with the silicon-bearing gas in the reaction space 13. The hydrogen results from the thermal decomposition of the SiH₄ to Si and hydrogen.

The skull layer should have a thickness that is sufficient to protect against contamination of the liquid product by the reactor chamber wall material. However, the skull layer thickness should not so great that it occupies an unnecessary amount of the space inside the reactor chamber, thus detrimentally diminishing the available reaction space. An unnecessarily thick skull layer will also be more difficult to be thermally controlled at the equilibrium thickness. In general, the average skull layer thickness should be 0.01 to 200 mm, more particularly 0.1 to 30 mm.

Liquid silicon or liquid reactive metal flows through the liquid product outlet 3. The geometrical form (and size) of the liquid product can be controlled by the design of the product outlet 3. For example, the outlet 3 can be designed to discharge (e.g., jetting through a nozzle) droplets or spheres (which are the preferred physical form of feedstock for mono- or multi-crystalline ingot production). In one embodiment, these droplets can be solidified in free fall through a solidification tower. The droplets can be collected in a container at the bottom of the solidification tower or can be pneumatically conveyed into a collection container. The outlet 3 also can be vibrated or subjected to a gas stream to influence the size of the droplets.

In view of the many possible embodiments to which the principles of the disclosed process, apparatus and system may be applied, it should be recognized that the illustrated embodiments are only preferred examples and should not be taken as limiting the scope of the invention.

## Claims

1. A method for producing silicon or a reactive metal, comprising:
introducing a silicon-bearing feed or reactive metal-bearing feed into a reactor chamber, wherein the reactor chamber includes a reactor chamber wall having (i) an inside surface facing a reaction space and (ii) an opposing outside surface;
generating a first thermal energy within the reaction space sufficient to generate a liquid silicon product or a liquid reactive metal product;
generating a second thermal energy exterior to the reactor chamber wall such that a heat flow from the second thermal energy initially impacts the outside surface of the reactor chamber wall; and
establishing an inside surface wall temperature within a temperature range that is below a melting point temperature of the silicon or the reactive metal by controlling the first thermal energy source and the second thermal energy source.

2. The method of claim 1, wherein an adjustable energy flow of 1 to 2000 kW/m² from the reaction space through the reactor chamber wall is produced by controlling the first thermal energy source and the second thermal energy source.

3. The method of claim 1, wherein the first thermal energy is plasma energy and the second thermal energy is induction heating or resistance heating.

4. The method of claim 1, further comprising forming a solid skull layer of silicon or the reactive metal on the inside surface of the reactor chamber wall, preferably wherein the solid skull layer has a thickness of less than 200 mm.

5. The method of claim 1, wherein the first thermal energy generates heat within the reactor space at a temperature above the melting point of silicon, and the first energy source and the second energy source combine to maintain the inside surface wall temperature at a temperature below the melting point of silicon.

6. The method of claim 1, wherein the reactor chamber wall is vertically aligned such that the liquid silicon or liquid metal can flow down the chamber wall.

7. The method of claim 1, wherein heat from the second thermal energy is controlled to maintain the inside surface wall temperature at a temperature below the melting point temperature of the silicon-bearing feed or the reactive metal feed, preferably wherein the inside surface wall temperature is maintained at 1 to 300°C below the melting point temperature of silicon or the reactive metal.

8. The method of claim 1, wherein a silicon-bearing feed is introduced into the reaction chamber and the second thermal energy maintains the inside surface wall temperature at a temperature of 1115 to 1414°C.

9. The method of claim 1 further comprising:
introducing silicon powder into said reactor chamber wherein generating a first thermal energy comprises generating a plasma in the reactor space;
the method further comprising:
thermally melting the silicon powder by subjecting the silicon powder to a temperature greater than the melting point of the silicon powder via the plasma, wherein the melting process produces liquid silicon;
maintaining the inside surface of the reactor chamber wall at an equilibrium temperature below the melting point of the silicon powder while melting the silicon powder; and
solidifying the liquid silicon after it exits the reactor chamber.

10. The method of claim 9, further comprising controllably heating the outside surface of the reactor chamber wall.

11. The method of claim 1 wherein generating said first thermal energy within the reaction space is sufficient to generate a heated reaction gas and a liquid silicon product or a liquid reactive metal product;
the method further comprising:
forming a solid skull layer of silicon or the reactive metal on the inside surface of the reactor chamber wall; and
forming a film of the liquid silicon product or the liquid reactive metal product such that the film flows down on at least a portion of the solid skull layer;
wherein the first thermal energy generates a first heat flow that progress as follows: heated reaction gas → liquid silicon or reactive metal film → solid silicon or reactive metal skull layer → reactor chamber wall, and the second thermal energy generates a second heat flow that progresses as follows: reactor chamber wall → solid silicon or reactive metal skull layer → liquid silicon or reactive metal film.

12. The method of claim 1, wherein the silicon-bearing feed is a silicon- bearing gas selected from SiₙH₂ₙ₊₂, wherein n is 1 to 4, dichlorosilane, trichlorosilane, silicon tetrachloride, dibromosilane, tribromosilane, silicon tetrabromide, diiodosilane, triiodosilane, silicon tetraiodide or a mixture thereof.

13. A reactor system, comprising:
a silicon-bearing feedstock or a reactive metal feedstock;
a reaction chamber that includes a reactor chamber wall that defines a chamber reaction space and includes (i) an inside surface facing the reaction space and (ii) an opposing outside surface;
a plasma energy source coupled to the reaction chamber and configured to generate thermal energy within the chamber reaction space;
an exterior thermal energy source configured to subject the outside surface of the reactor chamber wall to heating, and located outside of the reactor chamber; and
a product outlet configured for withdrawing liquid silicon or liquid reactive metal from the reaction chamber.

14. The reactor system of claim 13, further comprising:
means for injecting a silicon powder feedstock into the reaction chamber; or
a hermetically sealed containment chamber encompassing at least the reactor chamber and the exterior thermal energy source; or
means for vibrating the product outlet;
and preferably wherein the exterior energy source comprises at least one induction coil disposed around a portion of the outside surface of the reactor chamber wall or wherein the exterior energy source comprises at least one resistance heater disposed in contact with a portion of the outside surface of the reactor chamber wall.

## Patentansprüche

1. Verfahren zur Herstellung von Silizium oder einem reaktionsfähigen Metall, wobei das Verfahren folgendes umfasst:
das Einführen eines Silizium enthaltenden Materials oder eines ein reaktionsfähiges Metall enthaltenden Materials in eine Reaktorkammer, wobei die Reaktorkammer eine Reaktorkammerwand aufweist, die folgendes aufweist: (i) eine innere Oberfläche, die zu einem Reaktionsraum ausgerichtet ist, und (ii) eine entgegengesetzte äußere Oberfläche;
das Erzeugen einer ersten Wärmeenergie in dem Reaktionsraum, die ausreicht, um ein flüssiges Siliziumprodukt oder ein flüssiges reaktionsfähiges Metallprodukt zu erzeugen;
das Erzeugen einer zweiten Wärmeenergie außerhalb der Reaktorkammerwand, so dass eine Wärmeströmung von der zweiten Wärmeenergie zuerst auf der äußeren Oberfläche der Reaktorkammer auftrifft; und
das Herbeiführen einer inneren Oberflächenwandtemperatur innerhalb eines Temperaturbereichs, der unterhalb einer Schmelzpunkttemperatur des Siliziums oder des reaktionsfähigen Metalls liegt, indem die erste Wärmeenergiequelle und die zweite Wärmeenergiequelle gesteuert werden.

2. Verfahren nach Anspruch 1, wobei ein anpassbarer Energiefluss von 1 bis 2000 kW/m² von dem Reaktionsraum durch die Reaktorkammer erzeugt wird, indem die erste Wärmeenergiequelle und die zweite Wärmeenergiequelle gesteuert werden.

3. Verfahren nach Anspruch 1, wobei es sich bei der ersten Wärmeenergie um Plasmaenergie handelt, und wobei es sich bei der zweiten Wärmeenergie um Induktionserwärmung oder Widerstandserwärmung handelt.

4. Verfahren nach Anspruch 1, wobei dieses ferner das Bilden einer festen Pfannenbärschicht aus Silizium oder dem reaktionsfähigen Metall an der inneren Oberfläche der Reaktorkammerwand umfasst, wobei die feste Pfannenbärschicht vorzugsweise eine Dicke von weniger als 200 mm aufweist.

5. Verfahren nach Anspruch 1, wobei die erste Wärmeenergie Wärme in dem Reaktorraum auf einer Temperatur oberhalb des Schmelzpunkts von Silizium erzeugt, und wobei die erste Energiequelle und die zweite Energiequelle gemeinsam die Wandtemperatur der inneren Oberfläche auf einer Temperatur unterhalb des Schmelzpunkts von Silizium halten.

6. Verfahren nach Anspruch 1, wobei die Reaktorkammer vertikal ausgerichtet ist, so dass das flüssige Silizium oder das flüssige Metall die Kammerwand herunter fließen können.

7. Verfahren nach Anspruch 1, wobei die Hitze von der zweiten Wärmeenergie so gesteuert wird, dass die Wandtemperatur der inneren Oberfläche auf einer Temperatur unterhalb des Schmelzpunkts des Silizium enthaltenden Materials oder des Materials eines reaktionsfähigen Metalls, wobei die Wandtemperatur der inneren Oberfläche vorzugsweise um 1 bis 300 °C unterhalb der Schmelzpunkttemperatur von Silizium oder des reaktionsfähigen Metalls gehalten wird.

8. Verfahren nach Anspruch 1, wobei ein Silizium enthaltendes Material in die Reaktionskammer eingeführt wird, und wobei die zweite Wärmeenergie die Wandtemperatur der inneren Oberfläche auf einer Temperatur zwischen 1115 und 1414 °C gehalten wird.

9. Verfahren nach Anspruch 1, wobei dieses ferner folgendes umfasst:
das Einführen von Siliziumpulver in die genannte Reaktorkammer, wobei das Erzeugen einer ersten Wärmeenergie das Erzeugen eines Plasmas in dem Reaktorraum umfasst;
wobei das Verfahren ferner folgendes umfasst:
das thermische Schmelzen des Siliziumpulvers, indem das Siliziumpulver über das Plasma einer Temperatur ausgesetzt wird, die höher ist als der Schmelzpunkt des Siliziumpulvers, wobei durch den Schmelzprozess flüssiges Silizium erzeugt wird;
das Halten der inneren Oberfläche der Reaktorkammerwand auf einer Gleichgewichtstemperatur unterhalb des Schmelzpunkts des Siliziumpulvers, während das Siliziumpulver geschmolzen wird; und
das Verfestigen des flüssigen Siliziums, nachdem es die Reaktorkammer verlässt.

10. Verfahren nach Anspruch 9, wobei dieses ferner das steuerbare Erhitzen der äußeren Oberfläche der Reaktorkammerwand umfasst.

11. Verfahren nach Anspruch 1, wobei das Erzeugen der genannten ersten Wärmeenergie innerhalb des Reaktionsraums ausreicht, um ein erhitztes Reaktionsgas und ein flüssiges Siliziumprodukt oder ein flüssiges Produkt eines reaktionsfähigen Metalls zu erzeugen;
wobei das Verfahren ferner folgendes umfasst:
das Bilden einer festen Pfannenbärschicht aus Silizium oder dem reaktionsfähigen Metall an der inneren Oberfläche der Reaktorkammerwand;
das Bilden eines Films des flüssigen Siliziumprodukts oder des flüssigen Produkts aus reaktionsfähigem Metall, so dass der Film zumindest an einem Abschnitt der festen Pfannenbärschicht herunter fließt;
wobei die erste Wärmeenergie einen ersten Wärmestrom erzeugt, der wie folgt verläuft: erhitztes Reaktionsgas → Film aus flüssigem Silizium oder reaktionsfähigem Metall → feste Pfannenbärschicht aus Silizium oder reaktionsfähigem Metall → Reaktorkammerwand, und wobei die zweite Wärmeenergie einen zweiten Wärmestrom erzeugt, der wie folgt verläuft: Reaktorkammerwand → feste Pfannenbärschicht aus Silizium oder reaktionsfähigem Metall → Film aus flüssigem Silizium oder reaktionsfähigem Metall.

12. Verfahren nach Anspruch 1, wobei es sich bei dem Silizium enthaltenden Material um ein Silizium enthaltendes Gas handelt, das ausgewählt wird aus SiₙH₂ₙ₊₂, wobei n zwischen 1 und 4 liegt, Dichlorsilan, Trichlorsilan, Silizum-Tetrachlorid, Dibromosilan, Tribromosilan, Silizium-Tetrabromid, Diiodosilan, Triidosilan, Silizium-Tetraioidid oder einer Mischung dieser.

13. Reaktorsystem, das folgendes umfasst:
ein Silizium enthaltendes Ausgangsmaterial oder ein Ausgangsmaterial aus einem reaktionsfähigen Metall;
eine Reaktionskammer, die eine Reaktionskammerwand aufweist, die einen Kammerreaktionsraum definiert und folgendes aufweist: (i) eine innere Oberfläche, die zu dem Reaktionsraum zeigt, und (ii) eine entgegengesetzte äußere Oberfläche;
eine Plasmaenergiequelle, die mit der Reaktionskammer gekoppelt und so konfiguriert ist, dass sie in dem Kammerreaktionsraum Wärmeenergie erzeugt;
eine äußere Wärmeenergiequelle, die so konfiguriert ist, dass sie die äußere Oberfläche der Reaktorkammer Erwärmung aussetzt, und wobei sie außerhalb der Reaktorkammer angeordnet ist; und
einen Produktauslass, der so konfiguriert ist, dass er flüssiges Silizium oder flüssiges reaktionsfähiges Metall aus der Reaktionskammer entzieht.

14. Reaktorsystem nach Anspruch 13, wobei dieses ferner folgendes umfasst:
eine Einrichtung zum Injizieren eines Siliziumpulver-Ausgangsmaterials in die Reaktionskammer; oder
eine hermetisch verschlossene Sicherheitskammer, welche zumindest die Reaktorkammer und die äußere Wärmeenergiequelle umschließt; oder
eine Einrichtung zum Vibrieren des Produktauslasses;
und wobei die äußere Energiequelle vorzugsweise mindestens eine Induktionsspule umfasst, die um einen Abschnitt der äußeren Oberfläche der Reaktorkammerwand angeordnet ist, oder wobei die äußere Energiequelle mindestens eine Widerstandsheizeinrichtung umfasst, die in Kontakt mit einem Abschnitt der äußeren Oberfläche der Reaktorkammerwand angeordnet ist.

## Revendications

1. Procédé de production de silicium ou d'un métal réactif, comprenant les étapes consistant à :
introduire une alimentation contenant du silicium ou une alimentation contenant un métal réactif dans une chambre de réacteur, dans lequel la chambre de réacteur comprend une paroi de chambre de réacteur ayant (i) une surface intérieure faisant face à un espace de réaction et (ii) une surface extérieure opposée ;
générer une première énergie thermique dans l'espace de réaction suffisante pour générer un produit de silicium liquide ou un produit de métal réactif liquide ;
générer une seconde énergie thermique extérieure à la paroi de la chambre du réacteur de telle sorte qu'un flux de chaleur provenant de la seconde énergie thermique affecte initialement la surface extérieure de la paroi de la chambre du réacteur ; et
établir une température de paroi de surface intérieure dans une plage de températures qui est inférieure à une température de point de fusion du silicium ou du métal réactif en contrôlant la première source d'énergie thermique et la seconde source d'énergie thermique.

2. Procédé selon la revendication 1, dans lequel un flux d'énergie réglable de 1 à 2 000 kW/m de l'espace de réaction à travers la paroi de la chambre du réacteur est produit en contrôlant la première source d'énergie thermique et la seconde source d'énergie thermique.

3. Procédé selon la revendication 1, dans lequel la première énergie thermique est de l'énergie de plasma et la seconde énergie thermique est un chauffage par induction ou un chauffage par résistance.

4. Procédé selon la revendication 1, comprenant en outre l'étape consistant à former une couche de fond de poche solide de silicium ou métal réactif sur la surface intérieure de la paroi de la chambre du réacteur, de préférence dans lequel la couche de fond de poche solide a une épaisseur inférieure à 200 mm.

5. Procédé selon la revendication 1, dans lequel la première énergie thermique génère de la chaleur à l'intérieur de l'espace de réacteur à une température supérieure au point de fusion du silicium, et la première source d'énergie et la seconde source d'énergie se combinent pour maintenir la température de la paroi de surface intérieure à une température inférieure au point de fusion du silicium.

6. Procédé selon la revendication 1, dans lequel la paroi de la chambre du réacteur est orientée verticalement de telle sorte que le silicium liquide ou le métal liquide peut s'écouler vers le bas de la paroi de la chambre.

7. Procédé selon la revendication 1, dans lequel la chaleur de la seconde énergie thermique est contrôlée pour maintenir la température de la paroi de surface intérieure à une température inférieure à la température du point de fusion de l'alimentation contenant du silicium ou de l'alimentation en métal réactif, de préférence dans lequel la température de la paroi de surface intérieure est maintenue entre 1 et 300 °C en dessous de la température du point de fusion du silicium ou du métal réactif.

8. Procédé selon la revendication 1, dans lequel une alimentation contenant du silicium est introduite dans la chambre de réaction et la seconde énergie thermique maintient la température de la paroi de surface intérieure à une température comprise entre 1 115 et 1 414 °C.

9. Procédé selon la revendication 1, comprenant en outre l'étape consistant à :
introduire de la poudre de silicium dans ladite chambre du réacteur dans lequel la génération d'une première énergie thermique comprend l'étape consistant à générer un plasma dans l'espace de réacteur ;
le procédé comprenant en outre les étapes consistant à :
faire fondre thermiquement la poudre de silicium en soumettant la poudre de silicium à une température supérieure au point de fusion de la poudre de silicium via le plasma, dans lequel le processus de fusion produit du silicium liquide ;
maintenir la surface intérieure de la paroi de la chambre du réacteur à une température d'équilibre en dessous du point de fusion de la poudre de silicium tout en faisant fondre la poudre de silicium ; et
solidifier le silicium liquide après sa sortie de la chambre du réacteur.

10. Procédé selon la revendication 9, comprenant en outre l'étape consistant à chauffer de façon contrôlée la surface extérieure de la paroi de la chambre du réacteur.

11. Procédé selon la revendication 1, dans lequel la génération de ladite première énergie thermique à l'intérieur de l'espace de réaction est suffisante pour produire un gaz de réaction chauffé et un produit de silicium liquide ou un produit de métal réactif liquide ;
le procédé comprenant en outre les étapes consistant à :
former une couche de fond de poche solide de silicium ou métal réactif sur la surface intérieure de la paroi de la chambre du réacteur ; et
former un film du produit de silicium liquide ou du produit de métal réactif liquide de telle sorte que le film s'écoule vers le bas sur au moins une partie de la couche de fond de poche solide ;
dans lequel la première énergie thermique génère un premier flux de chaleur qui progresse comme suit : gaz de réaction chauffé → film de silicium ou de métal réactif liquide → couche de fond de poche solide de silicium ou de métal réactif → paroi de la chambre du réacteur, et la seconde énergie thermique génère un second flux de chaleur qui progresse comme suit : paroi de la chambre du réacteur → couche de fond de poche solide de silicium ou de métal réactif → film de silicium ou de métal réactif liquide.

12. Procédé selon la revendication 1, dans lequel l'alimentation contenant du silicium est un gaz contenant du silicium choisi parmi SiₙH_{2n +2}, où n est 1 à 4, dichlorosilane, trichlorosilane, tétrachlorure de silicium, dibromosilane, tribromosilane, tétrabromure de silicium, diiodosilane, triiodosilane, tétraiodure de silicium ou un mélange de ceux-ci.

13. Système de réacteur, comprenant :
un produit de départ contenant du silicium ou un produit de départ contenant du métal réactif ;
une chambre de réaction qui comprend une paroi de la chambre du réacteur qui définit un espace de réaction de chambre et comprend (i) une surface intérieure faisant face à l'espace de réaction et (ii) une surface extérieure opposée ;
une source d'énergie plasma couplée à la chambre de réaction et configurée pour générer de l'énergie thermique à l'intérieur de l'espace de réaction de chambre ;
une source d'énergie thermique extérieure configurée pour soumettre la surface extérieure de la paroi de la chambre du réacteur au chauffage, et située à l'extérieur de la chambre du réacteur ; et
une sortie de produit configurée pour retirer le silicium liquide ou le métal réactif liquide de la chambre de réaction.

14. Système de réacteur selon la revendication 13, comprenant en outre :
des moyens pour injecter un produit de départ de poudre de silicium dans la chambre de réaction ; ou
une chambre de confinement hermétique entourant au moins la chambre du réacteur et la source d'énergie thermique extérieure ; ou
des moyens pour faire vibrer la sortie de produit ;
et de préférence dans lequel la source d'énergie extérieure comprend au moins une bobine d'induction disposée autour d'une partie de la surface extérieure de la paroi de la chambre du réacteur ou dans lequel la source d'énergie extérieure comprend au moins un réchauffeur à résistance disposé en contact avec une partie de la surface extérieure de la paroi de la chambre du réacteur.
